# EUROPEAN PATENT APPLICATION

(11) **EP 2 009 295 A1**
(43) Date of publication of application: **31.12.2008**
(21) Application number: 08158177.9
(22) Date of filing: 13.06.2008
(51) Int. Cl.: F16B 7/22, E06B 3/988

(54) **Snap connection system**

(30) Priority: 13.06.2007 NL 1033981
(71) Applicant: Opmeer, Jan, 3335 BE Zwijndrecht (NL)
(72) Inventor: Opmeer, Jan, 3335 BE Zwijndrecht (NL)
(74) Representative: Hatzmann, Martin

(57) **Abstract**

The invention provides a snap connection system, comprising a first profile section part (1) having a first recess (2) and a second profile section part (11) which is close-fittingly receivable in the first recess (2), further comprising locking means (21) which, when the second profile section part (11) is received in the first recess (2), secure the two profile section parts relative to each other while forming a snap connection.

## Description

The invention relates to a snap connection system for connecting at least two section parts.

With such systems, the connections are possible through cooperation of one or more locking means. The sections can, for instance, be slid over a connecting element, wherein the connecting element has several projecting parts over which the section fits. After this, the sections can be locked by means of a resilient securing. However, by means of such systems, the sections can be connected only at the ends. As a result, with more complex constructions, many shorter section parts are required.

Another possibility for connecting sections is known from document US 3 778 175. This document shows a connecting system wherein a resilient connecting element is snapped at an end face of a section to another, continuous section. Here, each time, one of the two sections is to end on the connection. Furthermore, the sections are complex due to the various constant recesses in the longitudinal direction. With this system, further, on a connection, each time, one section is connected by its end face, whereby a construction with this system is weakened.

An object of the invention is to provide a relative inexpensive, stable connecting system that can be of flexible design. More specifically, the invention aims to provide a snap connection system with which the above-mentioned drawbacks are avoided. To that end, the system according to the invention comprises a first section part having a first recess and a second section part which is close-fittingly receivable in the first recess, further comprising locking means which, when the second section is received in the first recess, secure the two section parts relative to each other while forming a snap connection. Each of the section parts can comprise, for instance, a substantially thin-walled extrusion profile with a substantially closed, constant cross-section, which cross-section is locally interrupted while forming a recess, for receiving a correspondingly formed, second section part, and wherein the first section part is further provided with locking means for securing the two section parts relative to each other through engagement on the sidewall of the corresponding section part, while forming a snap connection. Further advantageous embodiments of the invention are described in the subclaims.

The invention will be described in further detail on the basis of an exemplary embodiment represented in a drawing. In the drawing:
Fig. 1 shows a perspective view of a first embodiment of the snap connection system;
Fig. 2 shows a perspective view of a second embodiment of the snap connection system;
Fig. 3 shows a detail view of the embodiment of Fig. 2;
Fig. 4 shows a perspective view of a third embodiment of the snap connection system;
Fig. 5 shows a perspective view of a connection of two section parts as shown in Fig. 4;
Fig. 6 shows a perspective view of a fourth embodiment of the snap connection system;
Fig. 7 shows a perspective view of a fifth embodiment of the snap connection system;
Fig. 8 shows a perspective view of the sixth embodiment of the snap connection system;
Fig. 9 shows a perspective view of a first section part according to a seventh embodiment of the snap connection system;
Fig. 10 shows a perspective view of a second section part of the seventh embodiment of the snap connection system;
Fig. 11 shows a perspective view of the section parts of Fig. 9 and 10 which interlock;
Fig. 12 shows a perspective view of a connecting element;
Fig. 13 shows a perspective view of a second embodiment of the connecting element;
Fig. 14 shows a side view of a third embodiment of the connecting element;

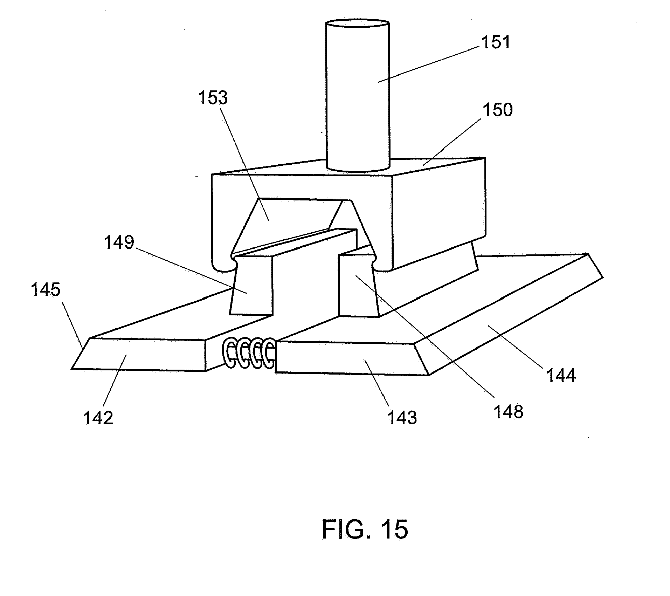

Fig. 15 shows a perspective view of the third embodiment of the connecting element;
Fig. 16 shows a perspective view of an eighth embodiment of the snap connection system;
Fig. 17 shows a perspective view of a ninth embodiment of the snap connection system;
Fig. 18 shows a perspective view of a fourth embodiment of the connecting element;
Fig. 19 shows a perspective view of a ninth embodiment of the connecting element; and
Fig. 20 shows a perspective view of a tenth embodiment of the snap connection system.

It is noted that the Figures are only a schematic representation of preferred embodiments of the invention. In the Figures, identical or corresponding parts are indicated with corresponding reference numerals. The different parts of the different embodiments have, insofar as possible, the same reference numerals, each time increased by ten.

A section part is to be understood as, but is not limited to, a part with a cross section remaining substantially equal in one length.

The length of a section part is understood to mean the size of the section part in precisely the direction of the section part over which the cross-section does not change. The width and the height are understood to mean the two sizes that are at right angles to the length, more specifically the height substantially in the drawing in the direction of the longest side of the sheet the drawing is depicted on, and the width substantially in the direction of the short side of the sheet the drawing is depicted on.

A thin-walled section part is to be understood to be, but is not limited to, a section wherein relative to the outermost diameter, the thickness of the walls each form less than a quarter of the outermost diameter. In other words, in a cross-section of such a section, either width wise or height wise, the walls are less than half the cross-sectioned diameter.

A sidewall is at least understood to include one of the walls of the section part.

Crosscut is at least understood to include the indication of location at the end of a section part at right angles to the longitudinal direction of the section part.

A recess in a section part is at least understood to include, but is not limited to, a location where material has been removed other than a saw cut through the entire section.

Close-fittingly is at least understood to include, but is no limited to, the clearance-free fit of parts without the parts clamping.

"Pressing slightly apart" and "pressing slightly together" are at least understood to mean a deformation of the material wherein the material deforms under the application of a force in the elastic range, such that the material does not lastingly change shape but that after removal of the deforming force, it bounces back to its original shape.

An intersecting connection is at least understood to means a connection with which both section parts continue and not end on the connection.

An angular connection is at least understood to mean a connection wherein both section parts terminate, a T-connection is understood to mean a connection wherein one section part terminates in the connection and the other one continues.

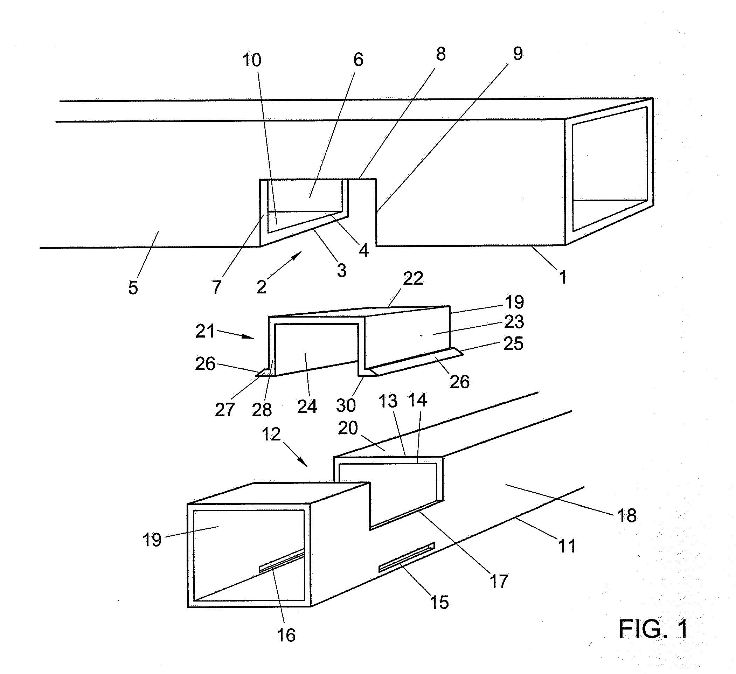

Fig. 1 shows a first connecting variant of the snap connection system, wherein the two section parts can intersect, i.e. neither of the two section parts terminates on the connection. The snap connection system comprises a first section part 1, wherein a recess 2 is provided in which a second section part 11 fits in a close-fitting manner. After being fitted into each other, the two section parts are kept together by a connecting element 21. In order to make the connection, the connecting element is slightly pressed together on the side of the bevelled edges 26 and 27, while the walls 22, 23 and 24 of the connecting element exhibit a resilient action. The connecting element is now inserted into the recess 12 of section part 11 such that the connecting lip 25 of the connecting element 21 projects through the slit-shaped recess 15 of the section part 11 and correspondingly, the connecting lip 27 of the connecting element 21 projects through the slit-shaped recess 16 of section part 11. Here, the connecting lips 5 and 27 project from the slit-shaped recess 15 and 16 precisely so far that slanting surfaces 26 project from the section part 11. If the section part 1 is then inserted into the recess 12 of section part 11, with the section part 11 also fitting into the recess 2 of the section part 1 in a close-fitting manner, then, at the last moment, the edges 3 of the recess 2 of section part 1 press against the slanting surfaces 26 of the element 21, which project through the recesses 15 and 16. Owing to the resilient action of the surfaces 22, 23 and 24 of the connecting element 21, the slanting surfaces 26 and the connecting lips 25 and 27 are pressed together slightly until they are pressed in so far that the section part can be inserted further into the recess 12 of section part 11. After edge 4 of recess 2 of the section part 1 has passed the slanting surfaces 26, the connecting element 21 snaps back to its original position wherein the edges 30 of the connecting element 21 engage surface 10 of the section part 1, whereby a fixed connection between the section parts 1 and 11 is formed. In Fig. 1, this connection is designed such that the depths of the recesses 2 and 12 together correspond precisely with the widths of the surfaces 5, 6 and 18 and 19 of the sections 1 and 11. As a result, the connection of the section parts is formed such that both the top and the bottom walls of the two section parts 1 and 11, viewed in the direction of insertion of the connection, are successively in the same planes. Here, the depths of the recesses 2 and 12 can be varied so that the sections interlock deeper or less deep. Here, the recesses 15 and 16 are to be accordingly adjusted in height, so that the connecting lips 25 and 26 are indeed at such a position that snapping occurs just before the edge 8 of the section part 1 and the edge 17 of section part 2 touch each other. As a result, a clearance free connection can be guaranteed.

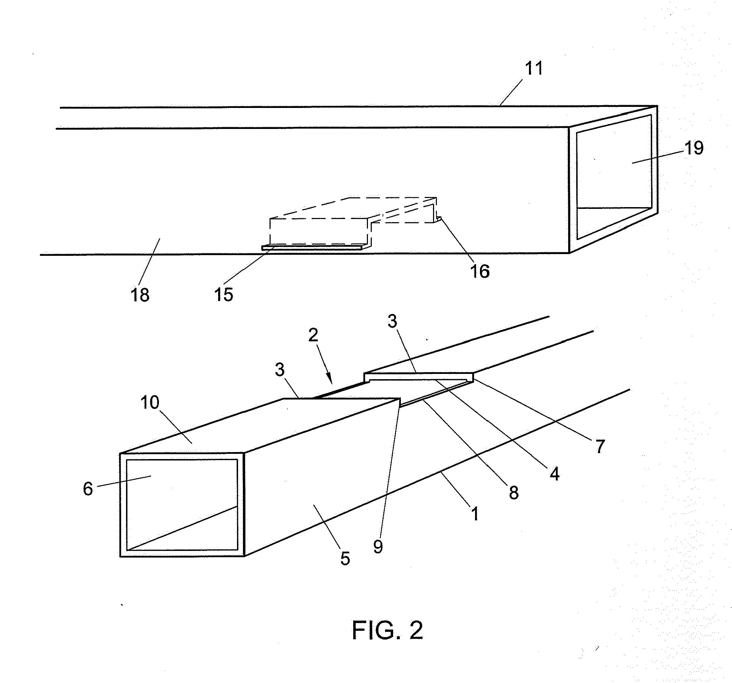

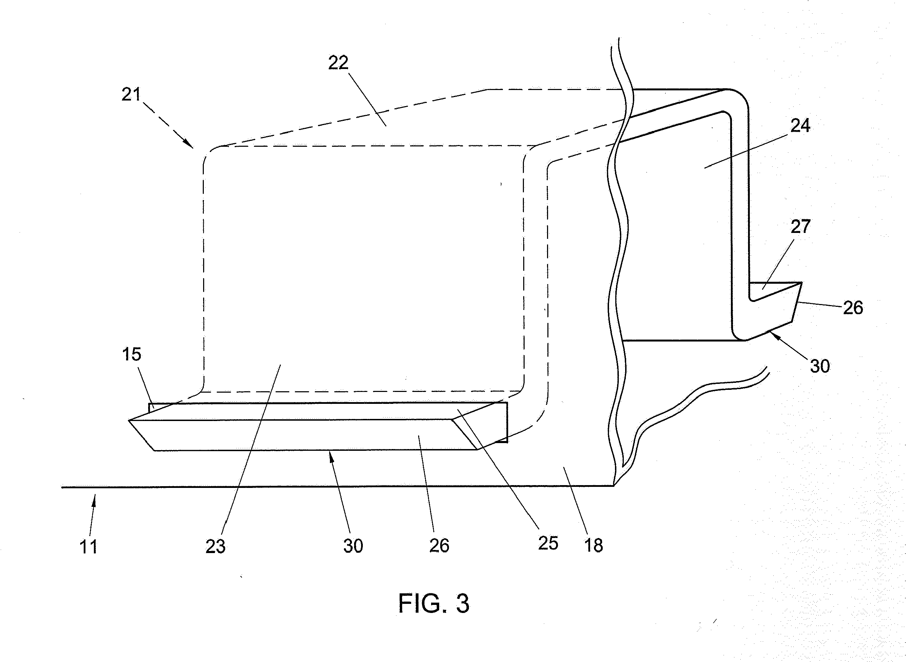

Fig. 2 shows, again, two section parts 1 and 11 wherein a connecting element 21 is inserted into the section part 11 and wherein the connecting lips 25 and 26 project through the slit-shaped recesses 15 and 16 in the walls 18 and 19 of section part 11. In the detailed view of Fig. 3 this is more clearly visible. Section part 1 is provided with a recess 2, in which the section part 11 fits in a close-fitting manner. The slanting surfaces 26 of the connecting element are bevelled such that, in a direction at right angles to wall 22 of section part 21, they face away relative to wall 22. If the section parts 1 and 11 are now inserted into each other by means of the recess 2, the edges 3 of the recess 2 of the section part 1 press against the slanting surfaces 26 of the connecting element 21. Owing to the resilient action of the walls 22, 23 and 24, the slanting surfaces 26 are slightly pressed together so that the edges 3 slide along the slanting surfaces 26. If the section part 11 is now inserted further into the recess 2, then the edges 4 pass the slanting surfaces 26 and the element 21 snaps into the recess 2, whereby the connecting lips 25 and 27 engage along the edges 4 on the wall 10 of the section part 1 and hence realize a connection.

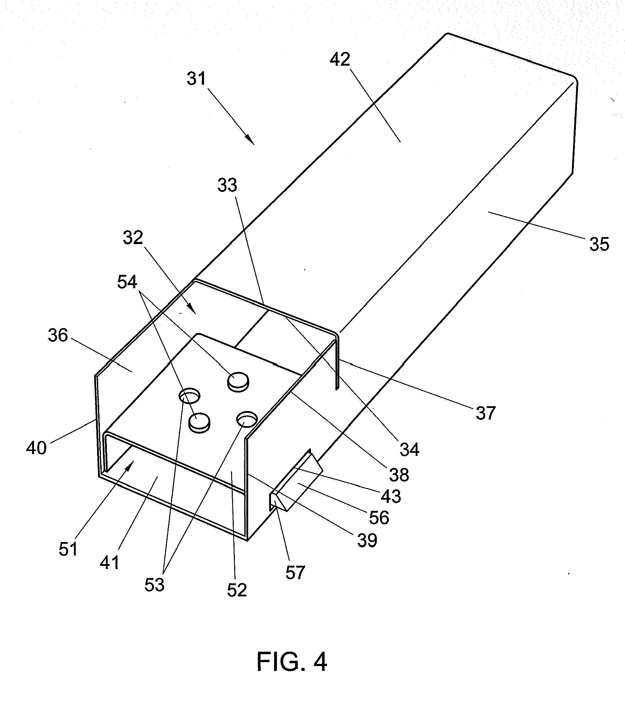

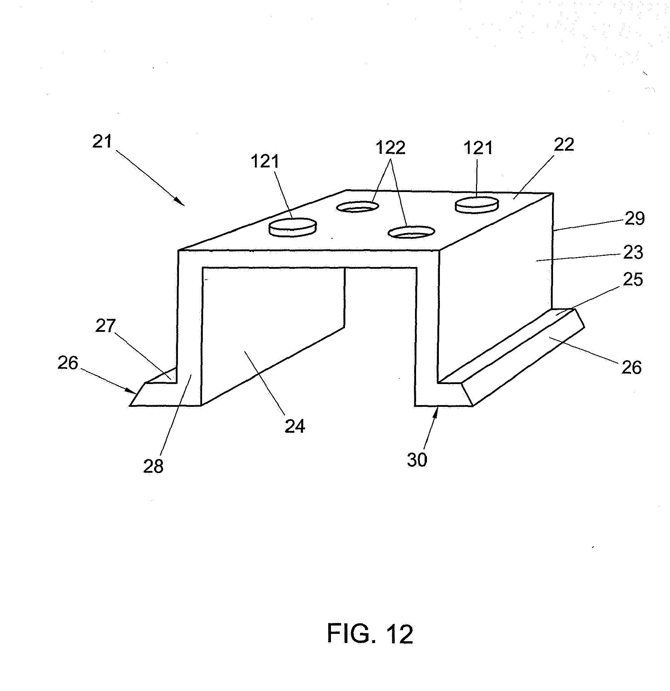

Fig. 4 shows an embodiment wherein two section parts with an identical recess configuration fit together staggeringly, in a close-fitting manner and thus form a corner where two section parts terminate. In this Figure, only one of the two section parts 31 is shown. If the second section part 31' is mentioned, the same reference numerals are used, provided with an apostrophe. In this embodiment, a section part 31' therefore fits into the section part 31, with section part 31' fitting in the recess 32' in a close-fitting manner and, at the same time, the section part 31 fitting into the recess 32' in a close-fitting manner. In order to secure the connection, in the recess 32 of section part 31 a connecting element 51 is provided. This connecting element 51 strongly resembles the connecting element of Figs. 1 and 12. However, in this case, the connecting element has one connecting lip 57 with a slanting surface 56. This connecting lip extends partly over the width of the connecting element 51, because the recess 43 of the section part 31 can extend only as far as a distance from the section part 31. For the connection to be sufficiently strong and rigid the recess 43 is to be enclosed on both sides by wall 35 of the section part 31. The connecting element 51 is further provided with two protrusions 54 and two recesses 53. The second, in this case identical (not shown) connecting element 51' fits with its protrusions 54' in the recesses 53 of connecting element 51, and conversely, the protrusions 54 of the connecting element 51 fit in the recesses 53' of the connecting element 51'.

In order to make the connection, section part 31' is now inserted into the recess 32 of section part 31. Here, the slot 37 of section part 31 engages the wall 35' of the section part 31'. Simultaneously, the slot 37' of section part 31' engages the wall 35 of the section part 31. The parts can be inserted into each other without resistance until edge 33 of section part 31 presses against the slanting surface 56' of the connecting element 51'. Simultaneously, edge 33' of the section part 31' presses against the slanting wall 56 of the connecting element 51. By inserting the section parts further into each other, the edge 33 presses the slanting wall 56' of the connecting element 51' resiliently aside. At the same time, the edge 33' presses the slanting wall 56 of the connecting element 51 resiliently aside. After the section parts are inserted into each other further, the edge 34 passes the slanting surface 56' and, at the same time, the edge 34' passes the slanting surface 56. Here, the connecting elements 51 and 51' bounce back into their original shape whereby the connection is effected through snapping. Here, the connecting lips 56 and 56' engage the insides of the walls 42' and 42 of the section part 31' and 31.

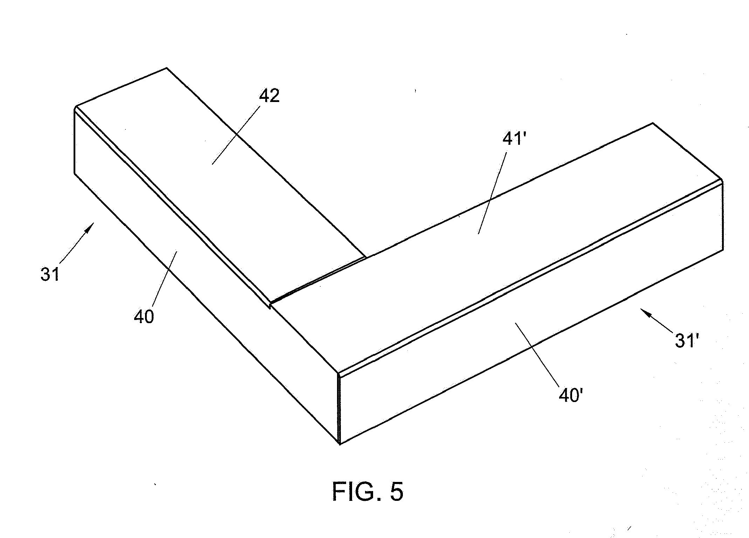

Fig. 5 shows the connection of two section parts as shown in Fig. 4. Here, in the embodiment shown, the section parts 31 and 31' are in the same plane. With this embodiment too, by adapting the depths of the recesses and the positions of the slit-shaped recesses 38 and 38' and the shapes of the connecting elements, the connection can also be designed such that the section parts are not in one plane but are staggered relative to each other.

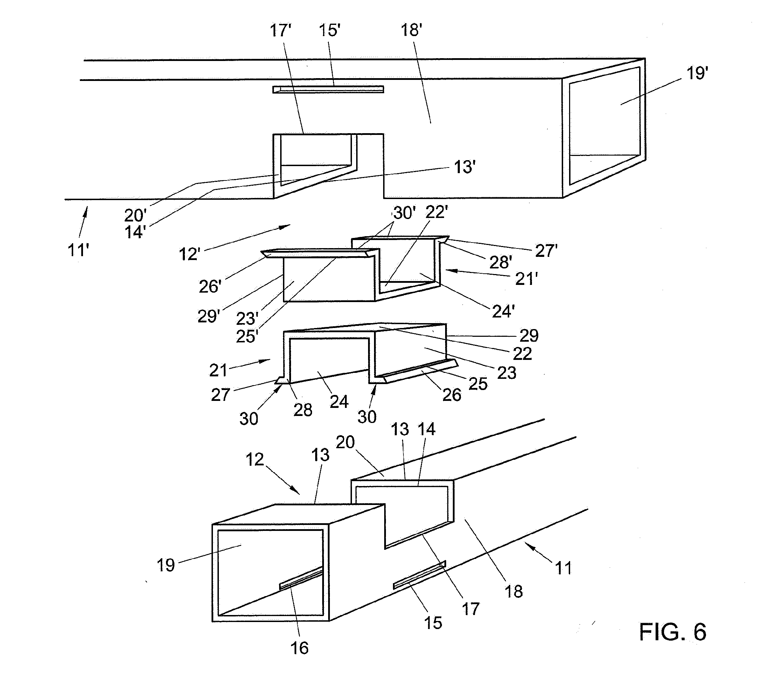

Fig. 6 shows an embodiment that shows similarities with the embodiment of Fig. 1. This Figure shows a section part 11 with a recess 12 and a section part 11' with a recess 12' wherein, by means of the recesses 12 and 12', the section part 11 and 11' fit together a close-fitting manner. To effect the connection, the connecting element 21 is inserted into the recess 12 of section part 11. Here, the connecting element 21 is placed such that the connecting lips 25 and 27 of the connecting element 21 project through the recesses 15 and 16 of the section part 11. Here, the connecting lips project precisely so far that the slanting surfaces 26 project at most precisely completely through recesses 15 and 16 in the walls 18 and 19 of the section part 11.

Then, the connecting element 21' is inserted into the recess 12' of section part 11'. Here, the connecting element 21' is placed such that the connecting lips 25' and 27' of the connecting element 21' project through the recesses 15' and 16' of the section part 11'. Here, the connecting lips project precisely so far that the slanting surfaces 26' project at most precisely completely through recesses 15' and 16' in the walls 18'and 19' of the section part 11'. If, by means of its recess 12', the section part 11' is now inserted into the recess 12 of the section part 11, then, the recesses 12 and 12' staggeringly interlock. The section parts 11 and 11' can be inserted into each other without resistance until the moment the edges 13 of the section part 11 touch the slanting surfaces 26' of the connecting element 21' and the edges 13' of section part 11' touch the slanting surfaces 26 of the connecting element 21. Presently, the section parts 11 and 11' are to be inserted into each other further with some force because the edges 13 and 13' and the slanting walls 26' and 26, respectively, press inward. The resilient action of the walls 22, 23 and 24 of the connecting elements 21 allows the connecting lips 25 and 27 to move together in the slit-shaped recesses 15 and 16 in the walls 18 and 19 of the section part 11. Correspondingly, the resilient action of the walls 22', 23' and 24' of the connecting element 21' allows the connecting lips 25' and 27' to move together in the slit-shaped recesses 15' and 16' in the walls 18' and 19' of the section part 11'. Upon insertion into each other of the section parts 11 and 11', the connecting element 21' snaps back into its original shape after the edges 14 of the section part 11 have passed the slanting surfaces 26'. Here, the surfaces 30' of the connecting lips 25' and 27' of the connecting element 21' engage the recess 12 on the insides of the wall 20 of the section part 11, whereby a fixed connection is formed. Accordingly, upon insertion into one another of the section parts 11 and 11', the connecting element 21 snaps back into its original shape after the edges 14' of the section part 11' have passed the slanting surfaces 26. Here, the surfaces 30 of the connecting lips 25 and 27 of the connecting element 21 engage the recess 12' on the insides of the wall 20' of the section part 11'. Owing to this double action of the two connecting elements 21 and 21' a stable, strong, fixed connection is formed. The two connecting elements of Fig. 6 are shown as separate parts. These elements can also be interconnected via the surfaces 21 and 21' so that only one connecting element is formed. This is further beneficial to the strength of the connection.

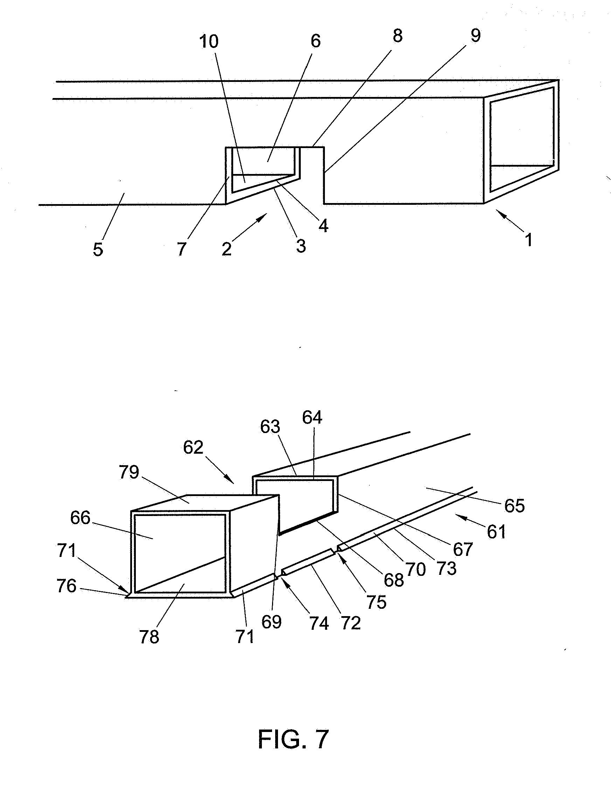

Fig. 7 shows two section parts 1 and 61, wherein the section part 65 is provided, at the corner of the wall 78 and the wall 65, at the outside, with an edge 73 forming slanting surfaces 70, 71 and 72. The slanting surfaces 70, 71 and 72 are formed at an obtuse angle to the outer surface of the wall 65 and at an acute angle to the outer surface of the wall 78. At the height of the edges 67 and 69 of the recess 62, the edge 73 is interrupted by the grooves 75 and 74. The section part 61 is further provided in the corner of the wall 78 and the wall 66 with an edge 76. The edge 76 comprises a slanting surface 71 that is formed at an obtuse angle to the outer surface of the wall 66 and at an acute angle to the outer surface of the wall 78. At the height of the edges 67 and 69, the edge 76 also has two recesses in the shape of grooves (not visible in the Figure). In order to effect the connection, the section parts 1 and 61 are to be inserted into each other, wherein the section part 1 fits into the recess 62 in a close-fitting manner and the section part 61 fits into the recess 2 in a close-fitting manner. The section parts 1 and 61 can therefore be provided in each others' recesses 2 and 62 in a staggered manner with relatively little resistance, until the moment the edges 3 of the section part 1 touch the slanting surfaces 72 of the edges 73 and 76. Owing to the resilient action of the material of the section part 1, through further insertion of the section parts 1 and 61 into each other, the edges 3 and 4 of the recess 2 in the section part 1 are slightly pressed apart. If the section parts 1 and 61 are inserted further into each other, then the slanting surfaces 72 pass the edges 4 of the section part 1 so that the section part 1 bounces back into its original shape and the section part 61 snaps tight in the recess in the section part 1. As a result, the bottom surface of the wall 78 that merges into the edges 73 and 76, engages the recess 2 on the inside surface of the wall 10 of the section part 1. As a result, a stable, securing connection is formed between the sections. The grooves 74 and 75 in the edges 73 and 76 in the section part 61 are provided to make way for the edges 7 and 9 of the recess 2 of the section 1. In this embodiment, the section part 1 can be designed just like the section 61 with identical edges 73 and 78. In that case, these edges simultaneously engage the inside surface of the wall 79 of the section 61 and a connection is formed wherein the sections 1 and 61 snap into each others' recesses 2 and 62 in a staggered manner.

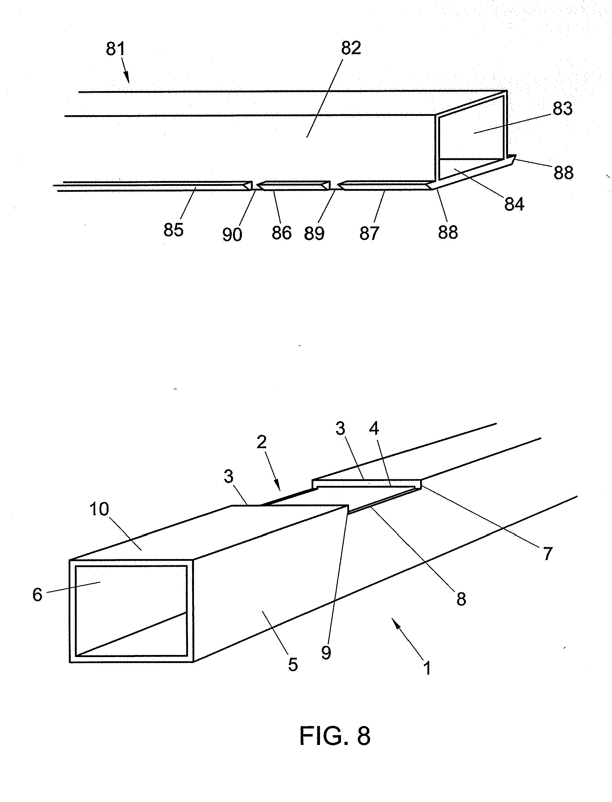

Fig. 8 shows another embodiment of the snap system. In Fig. 8, a section part 81 comprises two edges 88. One of these edges is provided at the outside of the section in the corner made by the surfaces 82 and 84. Here, the edge 88 has slanting surfaces 85, 86 and 87. The edge 87 is interrupted by two recesses that are formed by the grooves 89 and 90. The slanting surface of the edge 88 forms an obtuse angle to the outside surface of the wall 84 of the section 81 and an acute angle to the outside wall of the wall 82 of the section 81. The grooves 89 and 90 in the edges 88 are provided to make way for the edges 7 and 9 of the recess 2 of the section part 1. If the section part 81 is inserted into the recess 2 of the section part 1, resistance is experienced in that the edges 3 of the recess 2 in the section part 1 press against the slanting surfaces 86 of the edges 88 of the section part 81. If the section parts are inserted into each other even further, the edges 3 and 4 are slightly pressed apart by the resilient action of the material of section 1. If the two sections are now inserted into each other still further, then the edges 4 of the recess 2 of the section part 1 pass the slanting surfaces 86 of the edges 88 of the section part 81. Here, the edges 88 of section part 81 snap into the recess 2 around the edges 4 of the recess 2 of the section part 1. Now, the edges engage the recess 2 on the inside surface of the wall 10 of the section part 1 and thus form a stable, securing connection. With this embodiment, again, both sections 1 and 81 can be provided with edges 88. Here, the edges of the section parts engage one another's recesses in a staggered manner. In this embodiment, the section 81 can also be a solid section.

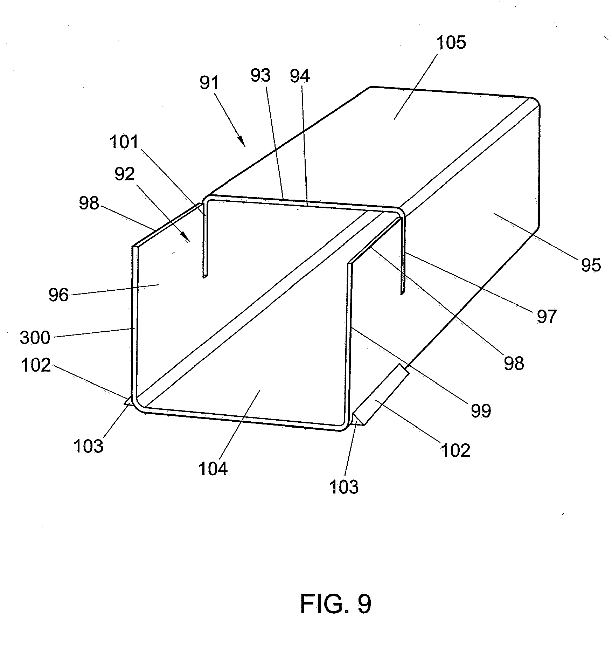

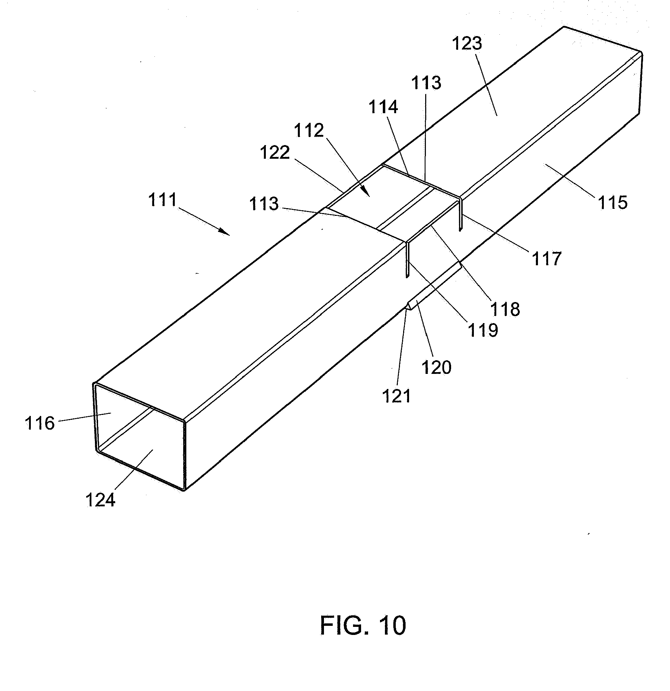

Figs. 9, 10 and 11 show section parts for a third connection type, i.e. a T-connection wherein one section part terminates on the connection and the other one continues. Here, the section part 91 has a recess 92 that is formed by removing a part of the surface 105 and by scoring the walls 95 and 96, so that slots 97 and 101 are formed. Upon insertion of the two section parts 91 and 101 into each other's recesses 112 and 92, the slots 97 and 101 fit, via the slots 117 and 119, around wall 115 of section part 111. Simultaneously, via the slots 97 and 101, the slots 117 and 119 fit around the walls 96 and 95 of section part 91 in a close-fitting manner. Inserting the section parts into each other is done without resistance until the edge 93 touches the slanting surface 120 of the edge 121 of the section part 111. At the same time, the slanting surfaces 102 of the edges 103 of the section part 91 touch the edges 113 of the recess 112 of the section part 111. As the slanting surfaces 102 press against the edges 113, these edges are slightly pressed apart. As the slanting surface 120 presses against the edge 93, the edge 93 is also pressed slightly aside. If the section parts are now pressed into each other even further, the slanting surfaces 102 pass beyond the edges 114, so that the edges 113 and 114 bounce back to their original position. Simultaneously, the slanting surface 120 of the edge 121 of the section part 111 passes beyond the edge 94, so that the edge 94 also bounces back to its original position. As a result, by means of snapping the two section parts into each other, a stable, securing connection is formed. Here, the outside surface of the wall 104, which at the same time forms a side of the edges 103, engages around the edges 114 of the recess 112 on the inside of the wall 123. Simultaneously, the outside of wall 124 which also forms a side of the edge 121 engages the inside of the wall 105 of the section part 91.

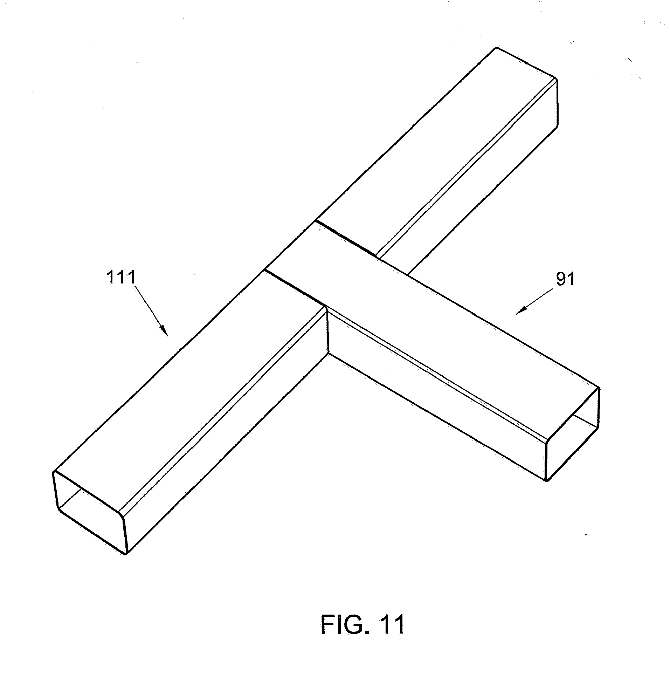

In Fig. 9, the edges 103 are designed as short edges. As an alternative, these edges can also continue over the entire length of the section, while for making the connection, at the level of the edge 99 and at the level of the slots 97 and 101, grooves are to be provided for making way for the edge 118 and the edge 112 of the recess 112 of the section part 111. Accordingly, the edge 121 of section part 111 can also extend over the entire length of the section part 111. In this case too, in the edge 122, at the level of the slots 117 and 119, recesses in the form of grooves are to be provided, to, in this case, make way for the edges 98 of the section part 91. After the section parts have been snapped into each other, the connection looks like what is shown in Fig. 11.

In the embodiment in Fig. 9 too, through the proper adjustment of the depth of the recesses 92, 112 and the slots 97, 101, 117 and 119 and by moving the position of the edges 103 and 121, the section parts can also be interconnected in a staggered manner relative to each other, hence, not in the same plane.

Fig. 12 shows a first embodiment of a connecting element with which the section parts can be connected. This connecting element has two connecting lips 25 and 26 with slanting surfaces 26. In the Figure, in the direction at right angles to the surface 22, the slanting surfaces are designed so as to become narrower towards the surface 22. For a connection as shown in Fig. 2, these slanting surfaces can also be designed so as to become wider towards plane 22 in a direction at right angles to the surface 22. When the connecting element is resiliently snapped into the first section and snapped tight in the second section, the resilient action of the connecting element is mainly carried out by the walls 22, 23 and 24. The connecting element can be produced by means of, for instance, extrusion, the edges 28 and 29 then forming the saw cuts. The connecting element can further be designed having a set of protrusions 121 and recesses 122, in which a second connecting element, turned over cross-wise, fits in a close-fitting manner. Here, the pattern of the protrusions 121 and recesses 122 can be designed in any configuration allowing a second connecting element to be fitted therein turned over cross-wise.

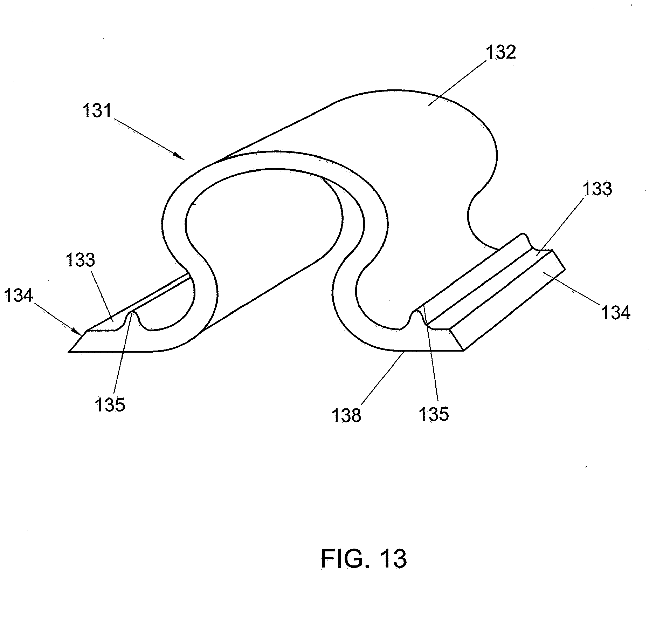

Fig. 13 shows another embodiment of the connecting element. Again, this connecting element 131 has two connecting lips 133 with slanting surfaces 134. The resilient action of this connecting element is enabled by the curved surface 132. The connecting element is further designed with two stop edges 135 to prevent the connecting element from moving in the connecting in the direction of the connecting lips 133.

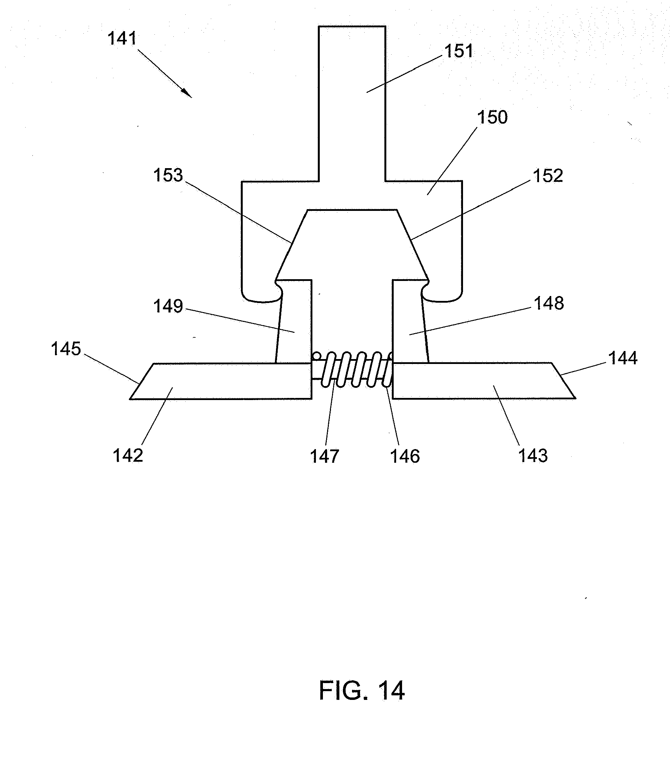

Fig. 14 shows a third embodiment of the connecting element 141, wherein the resilient action is enabled by at least one spring 146, which forces the two parts 142 and 143 apart over a guiding rod. The guiding rod is fixedly connected in one of the parts 142 or 143, and is guidably attached in the other part. The parts 142 and 142 each comprise a protrusion 148 and 149 which are held together by a clamping part 150. The clamping part 150 comprises two slanting surfaces 152 and 153 and a stem-shaped knob 151. The element may be designed such that the stem-shaped knob projects through a wall of a first section. By presently pushing the knob, the protrusions 148 and 149 are forced together through the effect of the two slanting surfaces 152 and 153. As a result, the connecting lips of the connecting element are also moved together. If this element is utilized in a connection as described hereinabove, through pushing the knob 151, a connection can simply be taken apart again. To that end, the sections can be provided with a corresponding recess or opening for operating the knob 151. Then, through the opening, a pressure pin can be inserted that unlocks the connection. The push knob 151 itself can also reach through a corresponding opening, so that it can be pressed in directly without an additional tool being required.

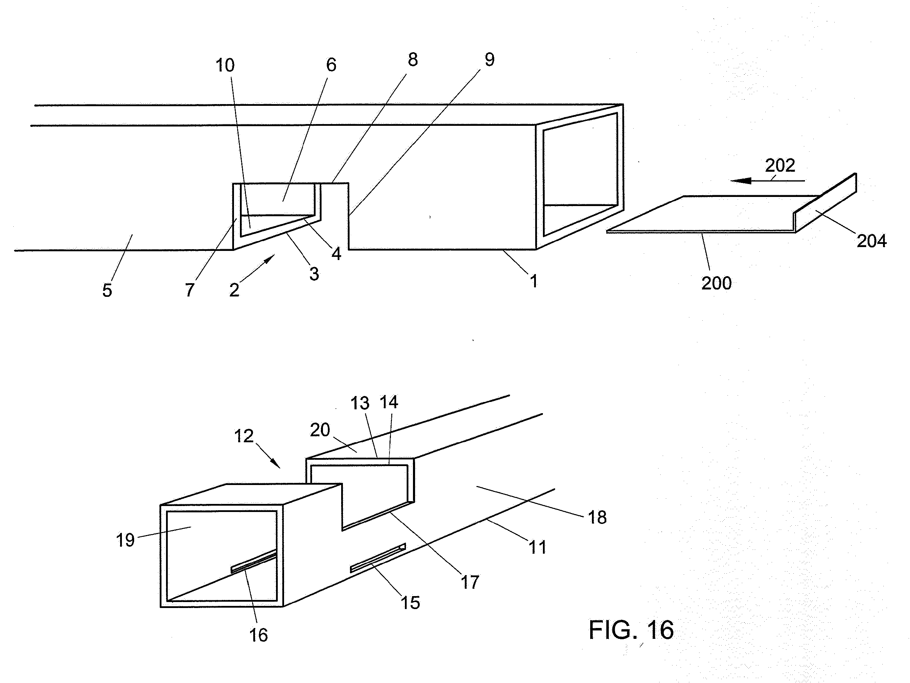

Fig. 16 shows an alternative method of connecting wherein after section parts 1 and 11 have been inserted into each others' recess, a securing strip 200 can be slid in the connection in the direction of the arrow 202, such that the securing strip 200 is provided along the inner surface 10 of the section part 1, guided by the recesses 15 and 16 of the section part 2. Here, the connecting lip 200 engages in a similar manner to the connecting element 21, as shown in Fig. 1.

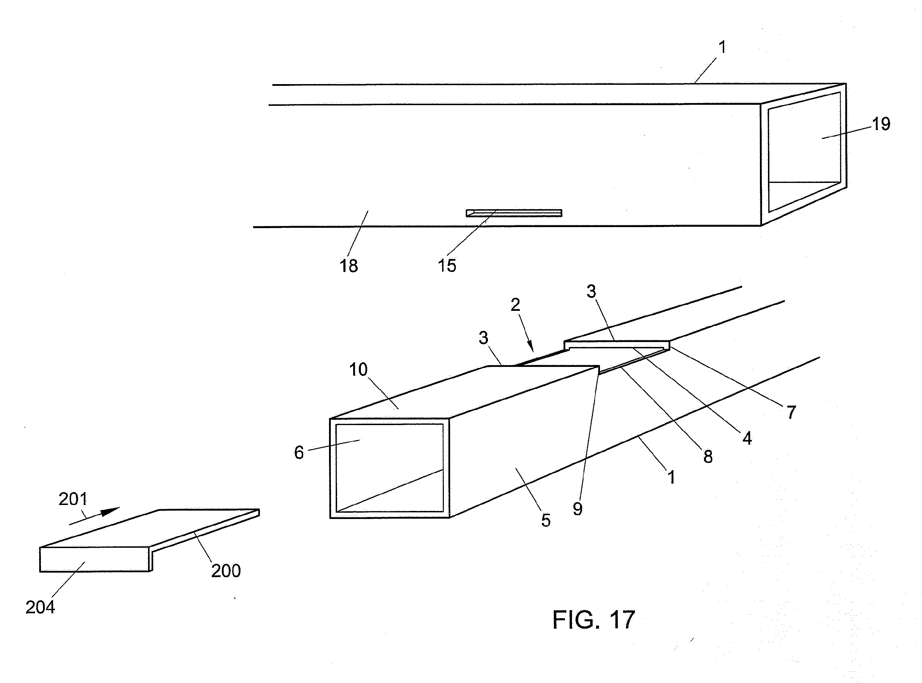

Fig. 17 shows a method of connecting that corresponds to the method of connecting of Fig. 16, again, the connection is effected by sliding-in a securing strip 200. In Fig. 17, the connection is effected by inserting the section 11 into the recess 2 of the section 1. If the section part 11 is provided as far as the edges 8 of the section part 1, the securing strip 200 is provided in the section part 1 in a sliding manner along the inside of the wall 10 of the section part 1 in the direction of the arrow 201, such that the connecting strip 200 projects through the recesses 15 and 16 of the section part 11 and the strip does not project from the recess 2 of the section part 1. Thus, the connecting strip 200 forms a connection that engages the inside surface 10 of the section part 1 and also engages the edges of the recesses 15 and 16 of the section part 11 which are located on the side that is placed closest to the edge of the section part 11.

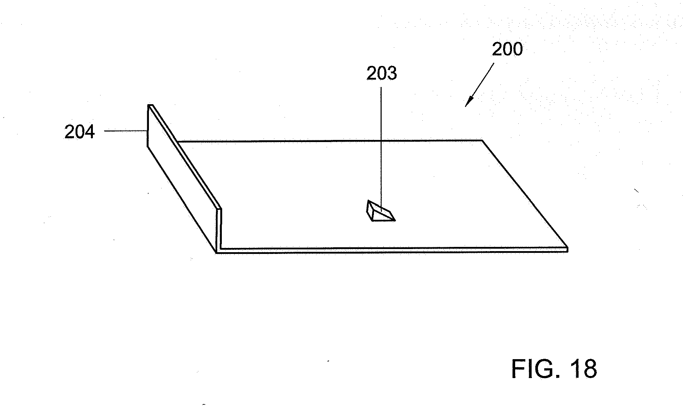

Fig. 18 shows a connecting strip 200. As an alternative, the connecting strip 200 can be designed with a snap system, such that upon sliding into the section, it snaps tight. This effect can be brought about by a small wedge-shaped protrusion 203 provided in the strip 200. The strip 200 is further provided with an edge 204 that serves for providing grip on the strip when the strip is slid into and from the section parts 1 and/or 11. When sliding the connecting strip 200 into the section part 1, after the protrusion 203 has for instance passed the outer edge of the recess 16 of the section part 11 (as shown in Figs. 16 and 17) owing to a snapping action, the connecting strip no longer tends to fall or slide from the connection in the direction opposite to the direction of the arrows 201 and/or 202. As a result, it is guaranteed that the connection is secure.

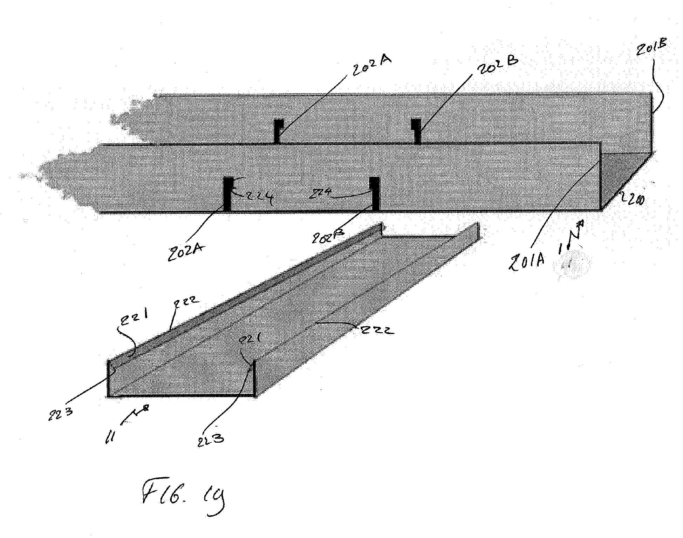

Fig. 19 shows a ninth embodiment of the snap connection system in a perspective representation, wherein the section parts are each provided with a body part with two walls upstanding relative thereto. In particular, the first section part 1 is of substantially U-shaped design with a body part 200 and sidewalls 201 upstanding relative thereto forming the legs of the U. The recess in the first section part comprises two slots 202A, 202B running transversely to the longitudinal axis of the section and extending over at least a part of the height of the legs 201. In the represented embodiment, the slots 202A, 202B extend through the body part 200 as far as into the legs. In an alternative embodiment, the slots 202A, 202B can extend from the free ends 203A, 203B of the legs 202A, 202B as far as into the legs.

The second section part 11 is also of substantially U-shaped design with a body part 20 having two sidewalls 205A, 205B upstanding relative thereto. The distance between the sidewalls 205A, 205B corresponds to the spacing between the slots 202A, 202B. Further, the height of the legs 205A, 205B of the second section part 11 corresponds to the depth of the slots 203A, 203B.

In this embodiment, the locking means 221 comprise resilient lips 221 borne by the second section part 11. In particular, the resilient lips 221 are formed as strips of folded-over material on the free ends 222A, 222B of the legs 205A, 205B. When the first and the second section part are pressed perpendicularly into each other so that the legs 205A, 205B of the second section part 11 reach into the slots 202A, 202B of the first section part 1, then the two section parts are substantially in one plane while enclosing an angle. In this example, the angle is approximately 90°, and the sections extend transversely to each other. Locking occurs in that the edges 223 of the resilient lips catch behind edges 224 that are formed at the location of a local widening or narrowing in the slots 202A, 202B. Thus, in a simple manner, for instance a grid can be formed.

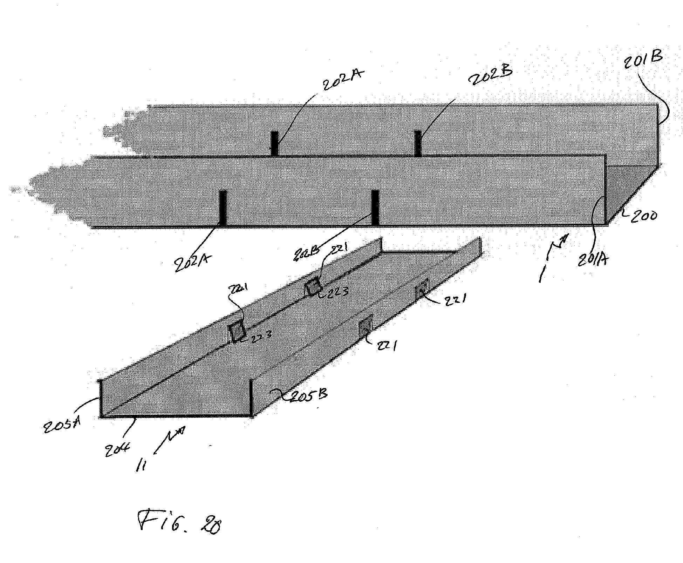

In Fig. 20, a tenth embodiment is shown which corresponds, in basic form, to the ninth embodiment shown in Fig. 19. In this tenth embodiment however, the edges 222 of the resilient lips 221 cooperate with the inside surface of the body part 200 of the first section part 1 located next to the slots 202.

Through the use of section parts with substantially U-shaped cross-sections, a relatively light yet highly rigid connection can be made. Such a connection can be utilized well in particular for manufacturing a light-weight metal modular ceiling.

Thus, a snap connection system is provided, comprising a first section part having a first recess and a second section part which is close-fittingly receivable in the first recess, further comprising locking means which, when the second section part is received in the first recess, secure the two section parts relative to each other while forming a snap connection. With the snap connection system, the locking means preferably engage the first section part. With the snap connection system, the locking means preferably cooperate with the first recess. Preferably, these locking means are borne on the second section part. The locking means preferably comprise one or more snap lips. The locking means for the snap connection system preferably comprise a detachable part that reaches through the wall of the second section part. In the connecting system, it is possible to provide further locking means that engage the second section part. The second section part can then be provided with a second recess for receiving the first section part therein in a close-fitting manner. It is also possible that the first section part bears the further locking means. Here, the further locking means can cooperate with the second recess. Generally, it is further preferred that the section parts are substantially thin-walled. In the snap connection system, the locking means and/or the further locking means can further cooperate with the inside of a wall of a section part adjacent a locking edge of one of the recesses. Here, at least one of the locking means can comprise a flange edge of a section part. The section parts can preferably be extrusion sections. It is further preferred that the locking means of the second section part cooperate with a first recess in the first section part, and wherein further locking means of the first section part cooperate with a second recess in the second section part. Further, locking means for a connecting system are provided which comprise spring means with one or more connecting lips. Also, a section part is provided that comprises at least one recess in which a second section part can be fitted in a close-fitting manner, with the above-described locking means cooperating with the at least one recess.

It is noted that the invention is not limited to the exemplary embodiments described here.

The embodiments of the connecting element as shown in Figs. 12 and 13 are for instance suitable for production by means of extrusion. Also, the parts can be manufactured by means of injection molding. The parts can also be milled from a material or be produced otherwise. Further, the invention can find utilization with section parts of various materials. For instance, various materials suitable for, for instance, extrusion are suitable for applications of the present invention. Various plastics, metals, wood and other material are suitable. Aluminum or alloys thereof or other metals can naturally be used. Also, the sections can be rolled or consist of butted plates, wherein the seam may or may not be welded tight. The recesses in the sections may be provided by means of a milling machine working in-line.

Further, the section parts in the embodiments are mostly square, relatively thin-walled sections. Naturally, it is possible to use rectangular sections instead of square ones. Also, sections of mutually different geometries can be interconnected by means of the connecting system of the invention. Here, the different recesses are to be adjusted accordingly. Also, the angles at which the sections are interconnected in the embodiments in the drawing are generally right angles. Other angles, oblique connections can naturally be made just as well by means of the present invention.

The snap connection system may find utilization in the assembly of racks or cupboards, wherein highly divergent possibilities of making racks or cupboards are possible. For instance, here, the sections may be provided with the recesses provided on predetermined positions, as a do-it-yourself kit. Also, an end user can get a template milling machine or cutting machine with the sections and provide the positions of the recesses himself, at will.

The snap connection system according to the invention is for instance also suitable for toys, while children can for instance build their own climbing frame. With this system as construction toy, further, bridges, cranes and many other structures can be copied.

The snap connection system can further be used as construction material for duckboards, garden houses, garden fences, other partitions and railings, pergolas, flower boxes, fences, crash barriers, ladders, scaffolding and the like. The snap connection system can also be used in furniture, kitchen fittings, display systems, market stalls, stages and other modular constructions. The connecting system is further eminently suitable as skeleton for tents, greenhouses and other temporary and/or permanent constructions. The snap connection system can further be reinforced by strips, from the same material as the section part or from a different material as the section part, wherein these strips can serve as locks, can be glued onto the sections, can be screwed on, be stapled on or be attached in a different manner, so that the connections can obtain additional sturdiness. The strips can be manufactured from, for instance, nylon, metal or a different material. These reinforcing elements can be provided both on the inside of the sections and on the outside of the sections. Here, corner elements can be considered for reinforcement such as utilized in, for instance, frames. Other additional reinforcing elements can be utilized too, if this is necessary or advisable. It is also possible that after a construction is finished, the complete sections are filled with a material that is for instance inserted in liquid condition and which then hardens. Various polymer solutions, foams, thermosetting or thermoplastic materials in melt or in elements reacting with each other can be utilized thereto. Also concrete or plaster can serve to that end. In that case, the sections can be considered as a sort of framework formed permanently or temporarily around a concrete, hardened cast.

Such variants will be directly clear to the skilled person and are understood to fall within the framework of the invention as set forth in the following claims.

## Claims

1. A snap connection system, comprising a first section part having a first recess and a second section part which is close-fittingly receivable in the first recess, further comprising locking means which, when the second section part is received in the first recess, secure the two section parts relative to each other while forming a snap connection.

2. A snap connection system according to claim 1, wherein the locking means engage the first section part.

3. A snap connection system according to claim 2, wherein locking means cooperate with the first recess.

4. A snap connection system according to any one of the preceding claims, wherein the locking means are borne on the second section part.

5. A snap connection system according to any one of the preceding claims, wherein the locking means comprises one or more snap lips.

6. A snap connection system according to any one of the preceding claims, wherein the locking means comprise a detachable part which reaches through the wall of the second section part.

7. A snap connection system according to any one of the preceding claims, wherein further locking means are provided which engage the second section part.

8. A snap connection system according to any one of the preceding claims, wherein the second section part is provided with a second recess for close-fittingly receiving the first section part therein.

9. A snap connection system according to any one of the preceding claims 7 or 8, wherein the first section part bears the further locking means.

10. A snap connection system according to any one of the preceding claims 7 - 9, wherein the further locking means cooperate with the second recess.

11. A snap connection system according to any one of the preceding claims, wherein the section parts are substantially thin-walled.

12. A snap connection system according to any one of the preceding claims, wherein the locking means and/or the further locking means cooperate with the inside of a wall of a section part adjacent a locking edge of one of the recesses.

13. A snap connection system according to any one of the preceding claims, wherein at least one of the locking means comprises a flange edge of a section part.

14. A snap connection system according to any one of the preceding claims, wherein the section parts are extrusion profiles.

15. A snap connection system according to any one of the preceding claims, wherein locking means of the second section part cooperate with a first recess in the first section part, and wherein further locking means of the first section part cooperate with a second recess in the second section part.

16. A snap connection system according to any one of the preceding claims, wherein the first and/or the second section part is provided with a body part with walls upstanding relative thereto.

17. A snap connection system according to claim 16, wherein the recess in the first section part comprises one or more slots in the section part.

18. A snap connection system according to claim 17, wherein the locking means comprise resilient blocking lips which are borne by the second section part.

19. Locking means for a connecting system according to any one of claims 1 - 18, comprising spring means and one or more connecting lips.

20. A section part for a connecting system according to any one of claims 1 - 18, comprising at least one recess in which a second section part can be fitted close-fittingly and wherein locking means according to claim 19 can cooperate with the at least one recess.
